Europäisches Patentamt

European Patent Office

Office européen des brevets

(19)

(11) EP 0 881 757 A1

(12) # DEMANDE DE BREVET EUROPEEN

(43) Date de publication:
02.12.1998 Bulletin 1998/49

(51) Int Cl.⁶: **H02K 21/04**, H02K 1/27

(21) Numéro de dépôt: 98401249.2

(22) Date de dépôt: 26.05.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 29.05.1997 FR 9706628

(71) Demandeur: ABB INDUSTRIE
F-77430 Champagne sur Seine (FR)

(72) Inventeur: Ammar, Brahim
77250 Villecerf (FR)

(74) Mandataire: Berger, Helmut et al
Cabinet WEINSTEIN
20, avenue de Friedland
75008 Paris (FR)

(54) "Machine électrique synchrone pourvue d'un dispositif d'excitation"

(57) L'invention concerne une machine électrique synchrone.

Cette machine est du type comprenant un stator et un rotor, pourvus d'un dispositif à enroulements d'excitation du rotor. La machine est caractérisée en ce que le dispositif d'excitation du rotor (2) comprend, en plus des enroulements d'excitation, des aimants permanents (3) et en ce que les enroulements, d'une part, et les aimants permanents, d'autre part, fournissent une partie du flux magnétique nominale.

L'invention est applicable aux machines électriques synchrones.

Fig. 1

EP 0 881 757 A1

**Description**

L'invention concerne une machine électrique synchrone, du type comprenant un stator et un rotor, pourvus d'enroulements d'excitation.

Il est connu que, dans une machine synchrone de ce type, le rotor est un élément de limitation de la puissance en raison de la difficulté à évacuer les pertes Joule induites par le courant d'excitation.

Pour résoudre ce problème, il a été proposé, afin d'éliminer les pertes de rotor, d'utiliser comme moyen d'excitation des aimants permanents. Or, outre le coût important des aimants, ce concept se heurte à la complexité des systèmes de régulation pour le maintien de la tension aux bornes de l'alternateur tant en charge qu'à vide.

La présente invention a pour but de proposer une machine synchrone qui apporte une solution aux problèmes susmentionnés.

Pour atteindre ce but, la machine synchrone selon l'invention est caractérisée en ce que le dispositif d'excitation comprend, en plus des enroulements d'excitation, des aimants permanents et en ce que les enroulements et les aimants fournissent une partie du flux magnétique nominal.

Selon une caractéristique de l'invention, chaque pôle du rotor comprend un aimant permanent qui est disposé symétriquement par rapport à l'axe polaire tandis que les encoches associés à ce pôle sont disposés de part et d'autre de l'aimant.

Selon une autre caractéristique de l'invention, les encoches s'étendent parallèlement à l'axe polaire.

Selon encore une autre caractéristique de l'invention, grâce à l'utilisation de l'aimant permanent, la profondeur des encoches des enroulements d'excitation est réduite et des canaux de refroidissement axiaux sont réalisés dans la zone du rotor, adjacente au fond des encoches, ainsi dégagées.

Selon encore une caractéristique de l'invention, les canaux de refroidissement axiaux présentent une forme avantageusement trapézoïdale et chaque canal s'étend selon un angle de 45° par rapport à l'axe de l'encoche à laquelle il est associé.

Selon encore une autre caractéristique de l'invention, le stator comporte, à sa périphérie extérieure, des ailettes radiales, faisant office de radiateur, de l'air de refroidissement étant pulsé par un ventilateur à travers la denture formée par les ailettes, le long du stator.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un seul mode de réalisation de l'invention et dans lesquels :

La figure 1 est une vue schématique en coupe perpendiculaire à l'axe, d'une machine électrique synchrone selon la présente invention.

La figure 2 représente, sous forme d'un graphique, les caractéristiques de fonctionnement d'une machine synchrone selon la présente invention.

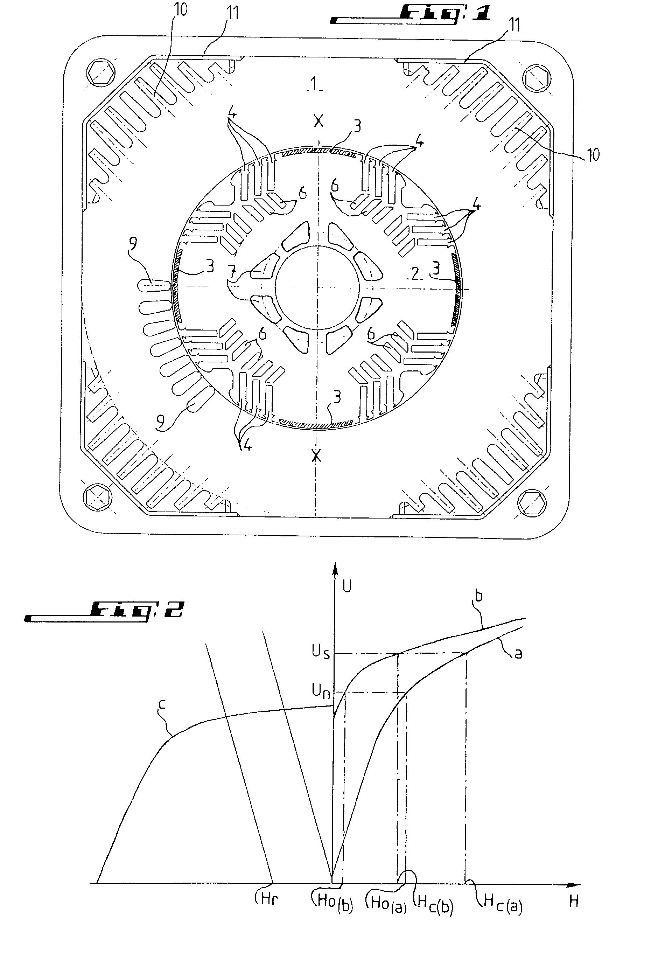

Sur la figure 1, les chiffres de référence 1 et 2 désignent respectivement le stator et le rotor d'une machine électrique synchrone selon la présente invention.

Le rotor comprend un dispositif d'excitation hybride, c'est-à-dire comprenant des aimants permanents et des enroulements d'excitation classique. Comme le montre clairement la figure 1, chaque pôle du rotor 2 comporte ainsi un aimant permanent 3 disposé à la périphérie du rotor, symétriquement par rapport à l'axe polaire X-X et des enroulements d'excitation disposés dans des encoches 4 pratiqués dans le rotor, de part et d'autre de l'aimant 3. Ces encoches s'étendent parallèlement à l'axe polaire. En raison de la présence de l'aimant 3, la profondeur des encoches 4 est réduite, ce qui permet, dans la zone du rotor ainsi dégagée d'encoches, de prévoir, associée à chaque encoche et adjacente au fond de celle-ci, un canal de refroidissement axial 6. Ce canal s'étend selon un angle de 45° par rapport à l'encoche 4 à laquelle il est associé. Ces canaux sont avantageusement de forme trapézoïdale.

On constate encore, près de l'évidement circulaire central des tôles composant le rotor, des canaux de refroidissement axiaux classiques 7.

Concernant le stator 1, il est pourvu d'enroulements disposés dans des encoches indiquées en 9. D'autre part, le stator comporte, à sa périphérie, des ailettes 10 formant une denture qui fait office de radiateur et est prévu aux quatre coins des tôles de forme carrée. Cette denture augmente la surface d'échange thermique. La denture à chaque coin est recouverte d'une tôle pliée 11. L'air de refroidissement pulsé par un ventilateur (non représenté) est guidé à travers les dentures et guidé le long du stator par les tôles pliées 11.

La figure 2 illustre le fonctionnement d'une machine selon la présente invention, sous forme d'un schéma simplifié pour démontrer l'avantage du dispositif d'excitation hybride selon l'invention.

Sur la figure 2, les axes de coordonnées U et H indiquent la tension et le champ magnétique. Les lettres a et b indiquent les courbes caractéristiques d'alternateurs respectivement avec l'excitation classique uniquement par enroulements d'excitation et avec l'excitation hybride par enroulements et aimants selon la présente invention. La courbe c indique la désaimantation de l'aimant. Sur la figure 2, Un et Us désignent respectivement la tension nominale et la tension de stator en charge. $H_{o(a)}$ et $H_{c(a)}$ désignent des champs d'excitation à vide et en charge dans la machine à excitation classique tandis que $H_{o(b)}$ et $H_{c(b)}$ indiquent les champs d'excitation à vide et en charge dans la machine à excitation hybride selon l'invention. Hr indique le champs démagnétisant (réaction).

On constate sur la figure 2 qu'à une force électromotrice interne en charge Us de la machine synchrone correspond sur la caractéristique _a_ à excitation uniquement par enroulements un champs $H_{c(a)}$ qui est supérieur à la valeur du champ $H_{c(b)}$ pour la machine à excitation hybride. Un dimensionnement judicieux des aimants 3 sur la figure 1 permet d'atteindre une valeur $H_{c(b)}$ telle que :

$$H_{c(b)} \leq 0,5 \; H_{c(a)}.$$

Dans une machine dimensionnée de cette sorte, les pertes par courant d'excitation sont réduites à 25 % des pertes d'une machine à excitation par enroulement, ce qui entraîne une amélioration sensible du rendement de la machine et une augmentation importante de la puissance massique.

L'excitation hybride proposée par l'invention présente l'avantage que les aimants sont dimensionnés pour fournir une partie du flux nominal alors que les enroulements fournissent le complément. La combinaison des deux modes d'excitation permet une régulation de tension aisée, d'une part, et une réduction sensible du coût des aimants, d'autre part, par la réduction de leur volume.

L'avantage du mode d'excitation hybride proposé par l'invention réside dans le fait que la présence des enroulements d'excitation permet d'éliminer l'inconvénient de l'excitation par aimant qui réside dans la complexité de la régulation, tandis que l'inconvénient des pertes rotor caractéristiques de l'excitation par enroulement est réduite par l'utilisation des aimants. La réduction de la profondeur des encoches logeant les enroulements d'excitation permet en plus une amélioration du dispositif de refroidissement du rotor, en associant à chaque encoche un canal axial de refroidissement, comme le montre la figure 1.

## Revendications

1. Machine électrique synchrone, du type comprenant un stator et un rotor, pourvus d'un dispositif à enroulements d'excitation du rotor, caractérisé en ce que le dispositif d'excitation du rotor (2) comprend, en plus des enroulements d'excitation, des aimants permanents (3) et en ce que les enroulements, d'une part, et les aimants permanents, d'autre part, fournissent une partie du flux magnétique nominal.

2. Machine selon la revendication 1, caractérisée en ce que chaque pôle du rotor (2) comprend un aimant permanent (3) qui est disposé symétriquement par rapport à l'axe polaire (X-X), tandis que les encoches (4) associées à ce pôle sont disposées de part et d'autre de l'aimant (3).

3. Machine selon la revendication 2, caractérisée en ce que les encoches (4) s'étendent parallèlement à l'axe polaire (X-X).

4. Machine selon l'une des revendications 1 à 3, caractérisée en ce que, grâce à l'utilisation des aimants permanents (3), la profondeur des encoches (4) des enroulements d'excitation est réduite et des canaux de refroidissement axiaux (6) sont réalisés dans la zone du rotor (2) adjacent au fond des encoches (4), ainsi dégagées.

5. Machine selon la revendication 4, caractérisée en ce que les canaux de refroidissement axiaux (6) présentent une forme avantageusement trapézoïdale et chaque canal (4) s'étend selon un angle de sensiblement 45° par rapport à l'axe de l'encoche (4) à laquelle il est associé.

6. Machine selon l'une des revendications 1 à 5, caractérisée en ce que le stator (1) comporte, à sa périphérie extérieure, des ailettes radiales (10) faisant office de radiateur, de l'air de refroidissement étant pulsé par un ventilateur à travers la denture formé par les ailettes, le long du stator.

7. Machine selon la revendication 6, caractérisée en ce que le stator (1) est formé par des tôles de forme sensiblement carrée dont les coins présentent lesdites ailettes (10) formant ladite denture et en ce que cette dernière est recouverte par un moyen, tel qu'une tôle (11) établissant avec la denture un canal de refroidissement à travers lequel est pulsé l'air de refroidissement précité.

Fig. 1

Fig. 2

**Office européen des brevets**

## RAPPORT DE RECHERCHE EUROPEENNE

Numéro de la demande

EP 98 40 1249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 84 19 864 U (FLECKENSTEIN) 13 novembre 1986 | 1,2 | H02K21/04 H02K1/27 |
| Y | * page 6, ligne 19 - ligne 31; figures 2,7,8 * | 3,6,7 | |
| | --- | | |
| Y | EP 0 680 130 A (ABB INDUSTRIE) 2 novembre 1995 * abrégé; figure 1 * | 3 | |
| | --- | | |
| Y | WO 93 20609 A (VEM-ANTRIEBSTECHNIK) 14 octobre 1993 * revendications; figure * | 6,7 | |
| | ----- | | |

**DOMAINES TECHNIQUES RECHERCHES (Int.Cl.6)**

H02K

Le présent rapport a été établi pour toutes les revendications

| Lieu de la recherche | Date d'achèvement de la recherche | Examinateur |
|---|---|---|
| BERLIN | 11 septembre 1998 | Kempen, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)